# EUROPÄISCHE PATENTSCHRIFT

(11) **EP 3 014 142 B1**
(45) Veröffentlichungstag und Bekanntmachung des Hinweises auf die Patenterteilung: **05.06.2019**
(21) Anmeldenummer: 14731555.0
(22) Anmeldetag: 18.06.2014
(51) Int. Cl.: F16F 7/116

(54) **AUSGLEICHSSCHWINGVORRICHTUNG**
COMPENSATING OSCILLATION DEVICE
DISPOSITIF D'ÉQUILIBRAGE OSCILLANT

(30) Priorität: 26.06.2013 DE 102013010655; 17.07.2013 DE 102013011928
(43) Veröffentlichungstag der Anmeldung: 04.05.2016
(73) Patentinhaber: AIM Infrarot-Module GmbH, 74072 Heilbronn (DE)
(72) Erfinder: ROSENHAGEN, Carsten, 74336 Brackenheim (DE); RÜHLICH, Ingo, 74076 Heilbronn (DE)
(74) Vertreter: Diehl Patentabteilung
(86) Internationale Anmeldenummer: PCT/EP2014/001664
(87) Internationale Veröffentlichungsnummer: WO 2014/206542

(56) Entgegenhaltungen:
- EP-A1- 1 780 440
- DE-A1- 19 823 716
- DE-A1-102009 023 971
- FR-A1- 2 758 866
- US-A- 4 922 159

## Beschreibung

Die Erfindung betrifft ein Linearkolbensystem mit einer Ausgleichsschwingvorrichtung, umfassend ein Gehäuse, wenigstens zwei Kopplungsglieder, und eine über jedes Kopplungsglied entlang einer Achse auslenkbar mit dem Gehäuse gekoppelte Schwungmasse, wobei jedes Kopplungsglied an jeweils wenigstens einem Befestigungsbereich am Gehäuse und an jeweils wenigstens einem Anbindungsbereich an der Schwungmasse befestigt Ist.

Hochleistungs-Infrarot-Sensoren erreichen die gewünschten elektro-optischen Eigenschaften, wie z.B. das Signal-zu-Rausch-Verhältnis, üblicherweise erst bei tiefen Temperaturen deutlich unterhalb der Umgebungstemperatur. Die Temperaturen liegen meist in einem Bereich zwischen 80K und 200K. Für die Kühlung solcher Sensoren werden bevorzugt Kryokühler eingesetzt, die meist nach dem Stirling-Prozess arbeiten. In diesem Prozess durchläuft ein Kältemittel, zumeist das Arbeitsgas Helium, eine periodische Druckoszillation. Die Druckänderung kann durch einen Kompressor mit einem oder mehreren beweglichen Arbeitskolben erreicht werden. Ein relevanter Antriebsmechanismus des bzw. der Kolben ist dabei insbesondere ein Linearantrieb. Die eingesetzten Kompressoren sind ventillos ausgestaltet, so dass die Frequenz der Motor- bzw. Kolbenbewegung der Frequenz der Druckänderung entspricht. Durch die axiale Bewegung des bzw. der Linearmotoren zusammen mit den angetriebenen Kolben ergeben sich Kräfte, die vom Gehäuse des Kompressors über die mechanische Befestigung auf ein angebundenes System übertragen werden. Bei zwei gegenläufig arbeitenden Kolben sind die Kräfte, die sich als Vibrationen bemerkbar machen, durch mehr oder weniger starke Unterschiede in den beiden Antriebshälften in Bezug auf Eigenschaften wie Motorwirkungsgrad, Reibung oder bewegte Masse bedingt. Bei Einkolben-Kompressoren können die Vibrationen sehr stark ausgeprägt sein, da es keinen Ausgleich der Kräfte zwischen zwei Antriebshälften gibt.

Um die durch die Kolbenbewegung verursachten Vibrationen zu verringern, wird In einem Linearkolben-Kühler oftmals ein dem Kolben oder seinem Gehäuse elastisch angekoppelter passiver Ausgleichsschwinger verwendet, der die Vibrationen der Kolbenbewegung kompensieren soll.

in der US 5,895,033 A wird eine Ausgleichsschwingvorrichtung für ein Linearkolbensystem beschrieben, in der eine ringförmige Schwungmasse an ihrem Innen durchmesser über zwei Blatt- oder Membranfederanordnungen an einem zentralen Haltebolzen gekoppelt ist, wobei vorzugsweise die Kolbenbewegung entlang der Ringachse zu erfolgen hat. Der Haltebolzen kann hierbei außen am Gehäuse des Kolbens montiert sein oder an der Innenwand einer Kapsel angebracht sein, welche auf das Gehäuse des Kolbens aufzuschrauben ist. Zur Erhöhung der Stabilität der Anordnung kann zudem noch eine oder mehrere Schrauben- oder Spiralfedern vorgesehen sein, welche zwischen der Schwungmasse und der Gehäusewand bzw. zwischen der Schwungmasse und einem Flansch am freien Ende des Bolzens eingespannt sind.

Bei einer Anordnung außerhalb des Gehäuses ist die ringförmige Schwungmasse nachteiligerweise möglichen Stößen ausgesetzt, welche die vibrationsdämpfende Wirkung der Masse beeinträchtigen können. Zudem ist aufgrund der ringförmigen Masseverteilung und der radialen Kopplung an den Haltebolzen im Falle von Erschütterungen die unerwünschte Möglichkeit gegeben, dass die Schwingungen nicht mehr nur entlang der Ringachse verlaufen, sondern gegen diese verkippt sind. Auch dies ist hinsichtlich der Wirkungsweise der Ausgleichsschwingvorrichtung nachteilig.

Mithin kann es überdies bei einer sehr kompakten Bauweise unvorteilhaft sein, die Schwungmasse durch etwaige zusätzliche Bauteile wie ein weiteres Federelement oder eine Kapsel vor Stößen zu schützen.

Aus der EP 1 780 440 A1 ist ein Vibrationsunterdrückungsgerät für einen Stirling-Motor bekannt, bei welchem ein eine Ausgleichsmasse tragender Stab über Blattfedern an eine an der Außenseite des Gehäuses des Stirling-Motors angebrachte Haltestruktur angekoppelt ist. Durch diese Konstruktion wird eine kostengünstige Lösung mit geringem Bauraum zur Dämpfung von Schwingungen geschaffen. Das Dokument bildet den nächstliegenden Stand der Technik für den Gegenstand des Anspruchs 1 und offenbart diesbezüglich ein Linearkolbensystem mit einem äußeren Gehäuse und mit einem linear im äußeren Gehäuse in Axialrichtung bewegbar gelagerten, als ein Arbeitskolben ausgebildeten Kolben und mit einer passiven Ausgleichsschwingvorrichtung, welche ein mit dem äußeren Gehäuse des Linearkolbensystems fest verbundenes Gehäuse und darin wenigstens zwei Kopplungsglieder und eine über jedes Kopplungsglied entlang einer Achse auslenkbar gekoppelte Schwungmasse umfasst, wobei die Achsen der Schwerpunktbewegungen von Kolben und Schwungmasse koinzidieren, wobei jedes Kopplungsglied an jeweils wenigstens einem Befestigungsbereich der Ausgleichsschwingvorrichtung und an jeweils wenigstens einem Anbindungsbereich an der Schwungmasse befestigt ist, wobei an den wenigstens zwei Kopplungsgliedern jeweils der wenigstens eine Anbindungsbereich zur Schwungmasse radial näher an der Achse liegt als der wenigstens eine Befestigungsbereich der Ausgleichsschwingvorrichtung.

In der US 2002/0121816 A1 ist eine Ausgleichsschwingvorrichtung genannt, in welcher eine Stange, an deren Enden hantelartig zwei Schwungmassen befestigt sind, über zwei Federanordnungen, welche zwischen den beiden Schwungmassen an der Stange angreifen, an ein Gehäuse gekoppelt sind. Zwischen den beiden Federanordnungen sind auf der Stange magnetisierbare Bleche und im Gehäuse Magnete eingebracht, so dass hierdurch ein Linearmotor gebildet wird, über welchen die Ausgleichsschwingvorrichtung aktiv betrieben werden kann. Ein passiver Betrieb der Ausgleichsschwingvorrichtung wird nicht näher erwähnt.

In der DE 10 2009 023 971 A1 ist eine Ausgleichsschwingvorrichtung für ein Linearkolbensystem dargestellt, in welcher eine Schwungmasse über eine Federanordnung direkt an eine starr mit dem Kolben verbundene Stange gekoppelt Ist und über weitere Federanordnungen an das Gehäuse des Linearkolbensystems angebunden Ist. Für die Funktion ist die Anbindung an den Kolben über die Stange wesentlich, was bei baulichen Veränderungen, die nur den Kolben betreffen, eine Neuausrichtung der Ausgleichsschwingvorrichtung insgesamt erfordert. Die DE 198 23 716 A1 offenbart einen aktiven Schwingungstilger mit einer magnetisch erregbaren Tilgermasse, welche mittels Blattfedern derart an einem Auflager befestigt ist, dass Bewegungen des Auflagers zumindest teilweise unterdrückt werden. Der Schwingungstilger dient dabei der Unterdrückung von von einem Verbrennungsmotor ausgehenden Schwingungen in Motorlagern von Kraftfahrzeugen.

Aus der US 4,922,159 A ist ein hochpräziser Linear-Aktuator bekannt, mit dem hochfrequente Vibrationen in im Weltall befindlichen Strukturen kompensiert werden können.

Aus der FR 2 758 866 A1 ist ein Vibrationsdämpfer für Schiffe mit einem durch Hydraulik-Flüssigkeit gedämpften Schwinger bekannt.

Der Erfindung liegt die Aufgabe zugrunde, ein Linearkolbensystem mit einer passiven Ausgleichsschwingvorrichtung anzugeben, in welcher die Schwungmasse bei kompakter und einfacher Bauweise möglichst unempfindlich gegenüber Stößen und Erschütterungen ist.

Die Aufgabe wird durch ein Linearkolbensystem mit den Merkmalen des Anspruchs 1 erfindungsgemäß gelöst.

Den gedanklichen Ausgangspunkt bildet hierbei eine Schwungmasse, welche entlang einer Achse zu linearen Schwingungen angeregt werden kann. Die Achse wird hierbei durch die Schwerpunktsbewegung der Schwungmasse definiert, und koinzidiert im Fall einer im Wesentlichen ringförmigen Masseverteilung mit der Ringachse,

Eine Anordnung der Schwungmasse im Ruhezustand zwischen zwei Kopplungsgliedern soll hierbei bedeuten, dass die Ausgleichsschwingvorrichtung zwei Kopplungsglieder aufweist, welche axial zueinander beabstandet sind, und zwischen deren Anbindungsbereichen mindestens der wesentliche Masseanteil und mindestens der wesentliche Volumenanteil der Schwungmasse konzentriert ist. Insbesondere ist hierbei auch eine Masseverteilung umfasst, welche sich in der Nähe der Achse auf beiden Seiten eines Anbindungsbereiches eines Kopplungsgliedes erstreckt, beispielsweise durch eine Vorrichtung zur Anbindung wie eine Schraube oder einen Flansch.

Die Erfindung geht in einem ersten Schritt davon aus, dass durch eine Kopplung der Schwungmasse an das Gehäuse nach innen zur Achse hin aufgrund der achsfernen Massenkonzentration unerwünschte Kippschwingungen um eine weitere Achse senkrecht zur gewünschten Schwingungsachse angeregt werden können. Eine Änderung der Geometrie der Schwungmasse unter gleichzeitiger Beibehaltung der Kopplung nach innen zur Achse hin könnte hierbei die Anzahl möglicher Anregungsmoden zwar reduzieren, jedoch verbleibende Schwingungen aufgrund der pendelartigen Anordnung nicht wirksam unterdrücken. Eine mögliche Erhöhung der Steifigkeit der Kopplung, z.B. mittels erhöhter Federkonstanten bei Kopplung über Federelemente, würde auch die gewünschte Schwingung durch eine Veränderung der Resonanzfrequenz beeinträchtigen und kann daher zur Vermeidung von unerwünschten Schwingungen nicht zielführend sein.

In einem zweiten Schritt erkennt die Erfindung, dass die Schwingungsachse gegen ein mögliches Verkippen stabilisiert werden kann, indem die Schwungmasse in zumindest einem Bereich außenseitig angebunden ist. Eine außenseitige Anbindung soll dabei bedeuten, dass für ein Kopplungsglied eine Befestigung am Gehäuse radial weiter außen liegt als eine Anbindung des entsprechenden Kopplungsgliedes an die Schwungmasse. Die Schwungmasse wird somit von den betreffenden Kopplungsgliedern radial von außen auf der Schwingungsachse gehalten. Eine außenseitige Anbindung eines Kopplungsgliedes an die Schwungmasse erlaubt zudem zumindest in unmittelbarer Umgebung des betreffenden Anbindungsbereiches eine achsnähere Massenkonzentration im Vergleich zu einer zentral gekoppelten ringförmigen Masseverteilung. Dadurch, dass Kräfte in einer radialen Richtung jeweils von einem achsfern befestigten Kopplungsglied aufgenommen werden, dessen Anbindungsbereich außenseitig an der Schwungmasse angeordnet sein kann, ist achsnah in entsprechender radialer Richtung keine Kopplung nötig. Somit können im betreffenden Bereich Massenanteile näher an der Schwingungsachse angeordnet sein. Durch die höhere Konzentration der Masse in der Nähe der Schwingungsachse wird diese bei Erschütterungen zusätzlich gegen mögliches Verkippen stabilisiert.

Eine derartige Anbindung mittels mehrerer Kopplungsglieder erlaubt hierbei ein besonders eine achsstabile Kopplung der Schwungmasse. Vorteilhaft ist hierbei, dass der Massenschwerpunkt der Schwungmasse im Ruhezustand in axialer Richtung zwischen zwei Kopplungsgliedern angeordnet ist. Hierdurch wird die Schwingungsachse besonders wirksam gegen ein Verkippen in Richtung der Kraftwirkung auf die Kopplungsglieder geschützt. Insbesondere können hierbei beide Kopplungsglieder jeweils drehsymmetrisch ausgebildet sein, so dass die Kraftwirkung auf jedes der beiden Kopplungsglieder im Wesentlichen radialsymmetrisch erfolgt, und somit ein Verkippen der Schwingungsachse in jedwede azimutale Richtung besonders erschwert wird.

In einem dritten Schritt erkennt die Erfindung, dass überdies eine achsferne Befestigung der Kopplungsglieder derart ausgestaltet werden kann, dass der Befestigungsbereich am Gehäuse die Schwungmasse vor Stößen schützt. Dadurch, dass der Befestigungsbereich des entsprechenden Kopplungsgliedes zum Gehäuse in radialer Richtung weiter von der Achse beabstandet ist als der Anbindungsbereich zur Schwungmasse, kann das Gehäuse in einer Umgebung des entsprechenden Befestigungsbereiches die Schwungmasse radial von außen umgeben und so vor Stoßen aus einer bestimmten Raumrichtung schützen. Insbesondere ist hierbei die Option einer vollständig außenseitigen Kopplung möglich, d.h., dass jeder Anbindungsbereich eines Kopplungsgliedes zur Schwungmasse radial näher an der Achse liegt als jeder Befestigungsbereich des entsprechenden Kopplungsgliedes zum Gehäuse. In diesem Fall kann eine Wandung des Gehäuses die Schwungmasse in azimutaler Richtung vollständig umgeben und somit vor im Wesentlichen radialen Berührungen bzw. direkten Stößen aus beliebiger Richtung schützen.

Als vorteilhaft erweist es sich, wenn jedes Kopplungsglied die Schwungmasse in einer Ebene senkrecht zur Achse im Wesentlichen starr koppelt. Durch eine Einschränkung radialer Freiheitsgrade lässt sich die Schwingungsachse wirksam stabilisieren.

In einer günstigen Ausgestaltung liegt jeder Anbindungsbereich eines Kopplungsgliedes zur Schwungmasse radial näher an der Achse als jeder Befestigungsbereich des entsprechenden Kopplungsgliedes zum Gehäuse. Bevorzugt kann diese Anordnung gesondert für jedes vorhandene Kopplungsglied gelten. Insbesondere können hierbei die betreffenden Kopplungsglieder ringscheiben-oder speichenförmig um die Schwungmasse herum angeordnet sein. Durch die genannte Anordnung wird die Schwungmasse außenseitig an betreffende Kopplungsgliedern angebunden und somit von diesen von außen auf der Schwingungsachse gehalten, welche hierdurch besonders stabil gegen Verkippen ist. Überdies lässt sich bei einer vollständig außenseitigen Kopplung der Schwungmasse die Massenverteilung bis auf mögliche Bohrungen zur Anbindung massiv um die Achse herum konzentrieren. Hierdurch wird die Schwungmasse zusätzlich träger gegen Anregungen von unerwünschten Kippschwingungen.

Vorteilhafterweise ist jedes Kopplungsglied an dem oder jeden Anbindungsbereich durch Schweißen und/oder Schrauben und/oder Kleben und/oder Klemmen (insbesondere durch eine elastische Vorspannung in den beteiligten Teilen oder auch in einem zusätzlichen Federelement) an die Schwungmasse angebunden, und/oder an dem oder jeden Befestigungsbereich durch Schweißen und/oder Schrauben und/ oder Kleben und/oder Klemmen am Gehäuse befestigt. Durch eine Verbindung der genannten Art zwischen Kopplungsglied und Gehäuse bzw. zwischen Kopplungsglied und Schwungmasse lässt sich ein Kopplungsglied in radialer und azimutaler Richtung auf einfache Weise fixieren, während die axiale Elastizität gewährleistet bleibt.

Zweckmäßigerweise ist jedes Kopplungsglied als ein in Axialrichtung elastisches Federelement ausgebildet. Durch die Ausgestaltung eines jeden Kopplungsgliedes als Federelement kann eine gewünschte axiale Elastizität besonders einfach über die Federrate eingestellt werden.

Als günstig erweist es sich weiter, wenn das Gehäuse und/oder die Schwungmasse im Wesentlichen rotationssymmetrisch ausgebildet sind. Eine im Wesentlichen rotationssymmetrische Form soll hierbei unvermeidbare Fertigungsungenauigkeiten sowie zur Montage, Anbindung oder Befestigung notwendige axiale Bohrungen mit umfassen, die im Detail zu einer Abweichung von einer rotationssymmetrischen Form führen. Bei einer derartigen Ausgestaltung der Schwungmasse weist die Schwingungsachse aufgrund der fehlenden azimutalen Vorzugsrichtung eine hohe Stabilität gegen ein Verkippen auf. Eine entsprechende Anpassung der Form des Gehäuses an die Form der Schwungmasse vereinfacht die Befestigung eines Kopplungsgliedes an das Gehäuse sowie seine Anbindung an die Schwungmasse. Insbesondere kann ein rotationssymmetrisches Gehäuse die Schwungmasse wirksam vor Stößen aus jeder radialen Richtung abschirmen.

Erfindungsgemäß nimmt die axiale Länge der Schwungmasse mit zunehmendem radialen Abstand von der Achse monoton ab. Unter der axialen Länge der Schwungmasse ist der Abstand zweier Punkte zu verstehen, welche sich Im gleichen Radialabstand und bei gleichem Azimutwinkel bzgl. eines Referenzpunktes jeweils auf den axial äußersten Oberflächen der Schwungmasse gegenüber liegen, wobei diese Punkte so zu wählen sind, dass sie nicht mit möglichen axialen Bohrungen für Montageelemente koinzidieren. Hierdurch wird die Massenverteilung möglichst achsnah konzentriert, was der Schwingungsachse eine erhöhte Trägheit gegen Anregungen von unerwünschten Kippschwingungen verleiht.

Günstigerweise ist jedes Kopplungselement im Wesentlichen, also bis auf unvermeidbare Fertigungsungenauigkeiten sowie zur Montage, Anbindung oder Befestigung notwendige Ausgestaltungen wie z.B. axiale Bohrungen, drehsymmetrisch ausgebildet. Dies umfasst insbesondere eine Ausgestaltung in Form einer Speichenscheibe oder einer Ringscheibe mit spiralförmigen Einschnitten. Durch eine drehsymmetrische Form werden radiale Kräfte möglichst gleichmäßig von jedem Kopplungsglied aufgenommen, und somit die Schwingungsachse wirksam gegen Erschütterungen stabilisiert.

Wiederum erfindungsgemäß koppelt jedes Kopplungselement im Ruhezustand der Schwungmasse diese in radialer Richtung an das Gehäuse, d.h., jedes Kopplungselement steht im Ruhezustand der Schwungmasse im Wesentlichen senkrecht zur Achse. Hierdurch kann ein Kopplungsglied radiale Kräfte auf die Schwungmasse besonders wirksam aufnehmen und somit die gewünschte Schwingungsachse stabil halten.

Als weiter günstig erweist es sich, wenn die Schwungmasse in radialer Richtung vom Gehäuse umgeben ist und das Gehäuse in einer axialen Richtung mit einem Deckel verschlossen ist. Somit verfügt die Schwungmasse über einen mechanischen Schutz des bewegten Schwingers vor äußerer Berührung, wobei zugleich eine kompakte Bauweise ermöglicht ist.

Der Kolben des Linearkolbensystems ist in dessen äußerem Gehäuse in Axialrichtung, bezogen auf die Achse der Ausgleichsschwingvorrichtung, bewegbar gelagert eingebracht. Die Achsen der Schwerpunktbewegungen von Kolben und Schwungmasse koinzidieren hierbei. Eine Anordnung von Kolben und Schwungmasse im selben Gehäuse erlaubt eine besonders kompakte Bauweise, bei der überdies die Schwungmasse durch die Wandung des Gehäuses wirksam vor Stößen geschützt werden kann. Insbesondere sorgt die koaxiale Lagerung von Kolben und Schwungmasse, also eine Anordnung, bei der sich der Schwerpunkt des Kolbens und der Schwerpunkt der Schwungmasse auf der selben Achse bewegen können, für eine vorteilhafte Kompensation der von der Kolbenbewegung erzeugten Vibration durch die Ausgleichsschwingvorrichtung.

Der Kolben im Gehäuse ist als ein Arbeitskolben eines Kompressors ausgebildet. Die genannte Ausgleichsschwingvorrichtung ist besonders dazu geeignet, die bei der Bewegung eines Kompressorkolbens auftretenden Kräfte zu kompensieren. Mit anderen Worten ist die Ausgleichsschwingvorrichtung für ein Linearkompressorsystem eingesetzt, wie es zur Kühlung von Hochleistungs-Infrarot-Sensoren verwendet wird.

Ein Ausführungsbeispiel der Erfindung wird anhand einer Zeichnung näher erläutert. Dabei zeigen:
- Fig. 1: ein Linearkolbensystem mit einer koaxial angeordneten Ausgleichsschwingvorrichtung in Querschnittsdarstellung, und
- Fig. 2: eine Ausgleichsschwingvorrichtung mit am Gehäuse angeordnetem Deckel in Querschnittsdarstellung.

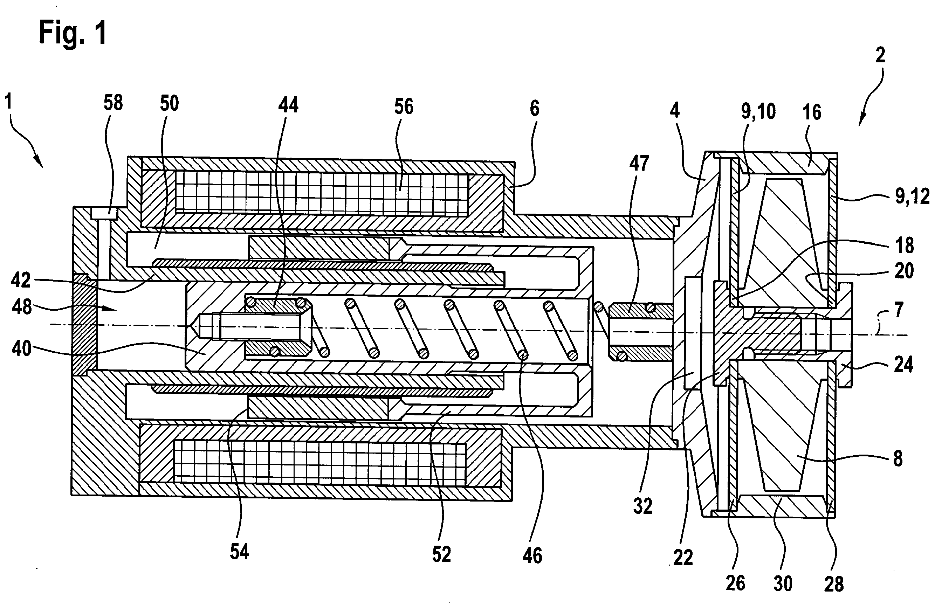

In Fig. 1 ist ein Linearkolbensystem 1 mit einer Ausgleichsschwingvorrichtung 2 im Querschnitt dargestellt. Im Ausführungsbeispiel ist das Linearkotbensystem 1 als ein Einkolben-Kryokühler ausgebildet. Das Gehäuse 4 der Ausgleichsschwingvorrichtung 2 ist mit dem äußeren Gehäuse 6 des Linearkolbensystems 1 fest gefügt. Im Gehäuse 4 ist eine bezüglich der Achse 7 rotationssymmetrische Schwungmasse 8 axial bewegbar gelagert, welche eine im Wesentlichen trapez förmige erzeugende Fläche aufweist. Die Schwungmasse 8 wird über zwei Kopplungsglieder 9, welche als Membranfedern 10, 12 ausgebildet sind, an einen zum Gehäuse 4 gehörenden Zylinderaufsatzes 16 gekoppelt. Hierbei werden die Membranfedern 10, 12 in ihren jeweiligen Anbindungsbereichen 18, 20 über zwei ineinander geschraubten Fixierschrauben 22, 24 an die Schwungmasse 8 angebunden. An den Befestigungsbereichen 26, 28 sind die Membranfedern 10, 12, einen umlaufenden Ring 30 im Zylinderaufsatz 16 von beiden Seiten umschließend, am Gehäuse 4 befestigt. Im Ruhezustand der Schwungmasse 8 stehen die Membranfedern 10, 12 im Wesentlichen senkrecht zu Achse 7, so dass die Anbindungsbereiche 18, 20 der Membranfedern 10, 12 an die Schwungmasse 8 radial näher an der Achse 7 liegen als die Befestigungsbereiche 26, 28 der Membranfedern 10, 12 zum Gehäuse 4. Zur Auslenkbarkeit der Schwungmasse 1 in Richtung der Achse 7 ist im Gehäuse 4 eine Aussparung 32 für die Fixierschraube 22 vorgesehen.

Im äußeren Gehäuse 6 des Linearkolbensystems 1 ist ein Kolben 40 in einem Zylinder 42 entlang der Achse 7 bewegbar eingebracht. Der Kolben 40 ist dabei über einen Haltebolzen 44 mit einer Schraubenfeder 46 verbunden, welche in axialer Richtung über einen weiteren Haltebolzen 47 mit dem Gehäuse 4 der Ausgleichsschwingvorrichtung 2 verbunden ist. Der Kolben 40 wird von der Schraubenfeder 46 in eine Kammer 48 im Zylinder 42 gedrückt. Um den Zylinder 42 herum befindet sich im äußeren Gehäuse 6 ein Ringspalt 50. In diesen greift eine mit dem Kolben 40 am der Kammer 48 gegenüberliegenden Ende verbundene zylindrische Wandung 52, auf der im Ringspalt 50 ein umlaufender magnetisierter Ring 54 aufgesetzt ist. Diesen magnetisierten Ring 54 umlaufend sind im äußeren Gehäuse 6 eine Anzahl von Magnetspulen 56 eingebracht. Der magnetisierte Ring 54 und die Magnetspulen 56 sind dazu ausgelegt, den Kolben 40 zu linearen Schwingungen entlang der Achse 7 anzutreiben. Die Kammer 48 ist über einen Kanal 58 mit einem in der Zeichnung nicht näher dargestellten Kaltfinger verbunden. Der Kolben 40 ist als Arbeitskolben eines Kompressors ausgebildet.

Vibrationen, welche durch die periodische Bewegung des Kolbens 40 auf dessen äußeres Gehäuse 6 und damit auf das Gehäuse 4 der Ausgleichsschwingvorrichtung 2 übertragen werden, können nun durch die Verbindung über die Membranfedern 10, 12 von der Schwungmasse 8 der Ausgleichsschwingvorrichtung 2 zumindest teilweise kompensiert werden. Die radial außenseitige Befestigung der Membranfedern 10, 12, also die Anordnung radial weiter außen liegender Befestigungsbereiche 26, 28 und radial weiter innen liegender Anbindungsbereiche 18, 20 an die Schwungmasse 8, sorgt hierbei für eine hohe Stabilität der Achse 7 gegen mögliche Erschütterungen. Dies wird durch die Konzentration der Massenverteilung der Schwungmasse 8 um die Achse 7 und eine damit einhergehende, weiter verbesserte Trägheit gegen Verkippen noch verstärkt.

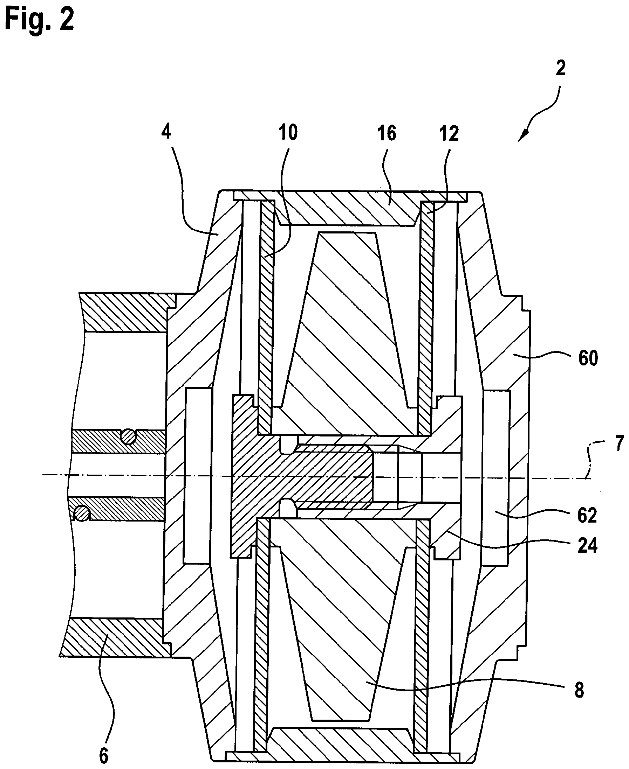

In Fig. 2 ist eine zu Fig. 1 alternative Ausgleichsschwingvorrichtung 2 mit einem am Gehäuse 4 angeordnetem Deckel 60 im Querschnitt dargestellt. Die Schwungmasse 8 ist dabei wiederum über Membranfedern 10, 12 an den Zylinderaufsatz 16 des Gehäuses 4 gekoppelt. Entlang der Achse 7 ist das Gehäuse 4 fest mit dem äußeren Gehäuse 6 eines in der Zeichnung nicht näher dargestellten Kolbens gefügt. Der Deckel 60 sitzt dem Gehäuse 4 am Zylinderaufsatz, der Anbindung an das äußere Gehäuse des Kolbens 40 bzgl der Schwungmasse 8 gegenüber liegend, auf. Der Schwungmasse 8 zugewandt, ist im Deckel 60 eine Aussparung 62 für die Fixierschraube 24 zur Auslenkbarkeit der Schwungmasse 8 vorgesehen. Durch den Deckel 60 ist die Schwungmasse 8 vor äußeren Berührungen geschützt.

### Bezugszeichenliste

- 1: Linearkolbensystem
- 2: Ausgleichsschwingvorrichtung
- 4: Gehäuse
- 6: äußeres Gehäuse des Linearkolbensystems
- 8: Schwungmasse
- 9: Kopplungsglied
- 10: Membranfeder
- 12: Membranfeder
- 16: Zylinderaufsatz des Gehäuses
- 18: Anbindungsbereich
- 20: Anbindungsbereich
- 22: Fixierschraube zur Anbindung
- 24: Fixierschraube zur Anbindung
- 26: Befestigungsbereich
- 28: Befestigungsbereich
- 30: umlaufender Ring
- 32: Aussparung für Fixierschraube
- 40: Kolben
- 42: Zylinder
- 44: Haltebolzen
- 46: Schraubenfeder
- 47: Haltebolzen
- 48: Kammer
- 50: Ringspalt
- 52: zylindrische Wandung
- 54: magnetisierter Ring
- 56: Magnetspule
- 58: Kanal
- 60: Deckel
- 62: Aussparung für Fixierschraube

## Patentansprüche

1. Linearkolbensystem (1) mit einem äußeren Gehäuse (6) und mit einem linear im äußeren Gehäuse (6) in Axialrichtung bewegbar gelagerten, als ein Arbeitskolben eines Kompressors ausgebildeten Kolben (40) und mit einer passiven Ausgleichsschwingvorrichtung (2), welche ein mit dem äußeren Gehäuse (6) des Linearkolbensystems (1) fest gefügtes Gehäuse (4) und darin wenigstens zwei Kopplungsglieder (9) und eine über jedes Kopplungsglied (9) entlang einer Achse (7) auslenkbar mit dem Gehäuse (4) gekoppelte Schwungmasse (8) umfasst,
wobei die Achsen der Schwerpunktbewegungen von Kolben (40) und Schwungmasse (8) koinzidieren,
wobei jedes Kopplungsglied (9) an jeweils wenigstens einem Befestigungsbereich (26, 28) am Gehäuse (4) der Ausgleichsschwingvorrichtung (2) und an jeweils wenigstens einem Anbindungsbereich (18, 20) an der Schwungmasse (8) befestigt ist,
wobei an den wenigstens zwei Kopplungsgliedern (9) jeweils der wenigstens eine Anbindungsbereich (18, 20) zur Schwungmasse (8) radial näher an der Achse (7) liegt als der wenigstens eine Befestigungsbereich (26, 28) zum Gehäuse (4) der Ausgleichsschwingvorrichtung (2), und
wobei mindestens der wesentliche Masseanteil und mindestens der wesentliche Volumenanteil der Schwungmasse (8) im Ruhezustand in axialer Richtung zwischen zwei Kopplungsgliedern (9) angeordnet ist,
wobei jedes Kopplungsglied (9) im Ruhezustand der Schwungmasse (8) diese in radialer Richtung an das Gehäuse (4) koppelt und
wobei die axiale Länge der Schwungmasse (8) mit zunehmendem radialen Abstand von der Achse (7) monoton abnimmt, so dass ihre Massenverteilung achsnah konzentriert ist.

2. Linearkolbensystem (1) nach Anspruch 1,
**dadurch gekennzeichnet,**
**dass** die Schwungmasse (8) in einer Ebene senkrecht zur Achse (7) im Wesentlichen starr angebunden ist.

3. Linearkolbensystem (1) nach Anspruch 1 oder Anspruch 2,
**dadurch gekennzeichnet,**
**dass** jeder Anbindungsbereich (18, 20) eines Kopplungsgliedes (9) zur Schwungmasse (8) radial näher an der Achse (7) liegt als jeder Befestigungsbereich (26, 28) des entsprechenden Kopplungsgliedes (9) zum Gehäuse (4).

4. Linearkolbensystem (1) nach einem der vorhergehenden Ansprüche,
**dadurch gekennzeichnet,**
**dass** jedes Kopplungsglied (9) als ein in Axialrichtung elastisches Federelement (10, 12) ausgebildet ist.

5. Linearkolbensystem (1) nach einem der vorhergehenden Ansprüche,
**dadurch gekennzeichnet,**
**dass** jedes Kopplungsglied (9) an dem oder jeden Anbindungsbereich (18, 20) durch Schweißen und/oder Schrauben und/oder Kleben und/oder Klemmen Insbesondere mittels elastischer Vorspannung an die Schwungmasse (8) angebunden ist, und/oder an dem oder jeden Befestigungsbereich (26, 28) durch Schweißen und/oder Schrauben und/oder Kleben und/oder Klemmen insbesondere mittels elastischer Vorspannung am Gehäuse (4) befestigt ist.

6. Linearkolbensystem (1) nach einem der vorhergehenden Ansprüche,
**dadurch gekennzeichnet,**
**dass** das Gehäuse (4) und/oder die Schwungmasse (8) Im Wesentlichen rotationssymmetrisch ausgebildet sind.

7. Linearkolbensystem (1) nach einem der vorhergehenden Ansprüche,
**dadurch gekennzeichnet,**
**dass** jedes Kopplungsglied (9) Im Wesentlichen drehsymmetrisch ausgebildet ist.

8. Linearkolbensystem (1) nach einem der vorhergehenden Ansprüche,
**dadurch gekennzeichnet,**
**dass** die Schwungmasse (8) In radialer Richtung vom Gehäuse (6) umgeben ist, und dass das Gehäuse (6) in einer axialen Richtung mit einem Deckel (60) verschlossen ist.

## Claims

1. Linear piston system (1) having an outer housing (6) and having a piston (40) which is configured as a working piston of a compressor and is mounted linearly in the outer housing (6) such that it can be moved in the axial direction, and having a passive compensating oscillation apparatus (2) which comprises a housing (4) which is joined fixedly to the outer housing (6) of the linear piston system (1) and, in the said housing (4), at least two coupling members (9) and an oscillating weight (8) which is coupled to the housing (4) such that it can be deflected along an axis (7) via each coupling member (9), the axes of the centre of gravity movements of the piston (40) and the oscillating weight (8) coinciding,
each coupling member (9) being fastened on in each case at least one fastening region (26, 28) to the housing (4) of the compensating oscillation apparatus (12) and on in each case at least one attaching region (18, 20) to the oscillating weight (8),
in each case the at least one attaching region (18, 20) to the oscillating weight (8) on the at least two coupling members (9) lying radially closer to the axis (7) than the at least one fastening region (26, 28) to the housing (4) of the compensating oscillation apparatus (2), and at least the substantial mass fraction and at least the substantial volume fraction of the oscillating weight (8) being arranged in the axial direction between two coupling members (9) in the rest state,
each coupling member (9) coupling the oscillating weight (8) in the radial direction to the housing (4) in the rest state of the said oscillating weight (8), and
the axial length of the oscillating weight (8) decreasing monotonically as the radial spacing from the axis (7) increases, with the result that its mass distribution is concentrated close to the axis.

2. Linear piston system (1) according to Claim 1, **characterized in that** the oscillating weight (8) is attached substantially rigidly in a plane perpendicularly with respect to the axis (7).

3. Linear piston system (1) according to Claim 1 or Claim 2, **characterized in that** each attaching region (18, 20) of a coupling member (9) to the oscillating weight (8) lies radially closer to the axis (7) than each fastening region (26, 28) of the corresponding coupling member (9) to the housing (4).

4. Linear piston system (1) according to one of the preceding claims, **characterized in that** each coupling member (9) is configured as a spring element (10, 12) which is elastic in the axial direction.

5. Linear piston system (1) according to one of the preceding claims, **characterized in that** each coupling member (9) is attached to the oscillating weight (8) on the or each attaching region (18, 20) by way of welding and/or screwing and/or adhesive bonding and/or clamping, in particular by means of elastic prestress, and/or is fastened to the housing (4) on the or each fastening region (26, 28) by way of welding and/or screwing and/or adhesive bonding and/or clamping, in particular by means of elastic prestress.

6. Linear piston system (1) according to one of the preceding claims, **characterized in that** the housing (4) and/or the oscillating weight (8) are/is of substantially rotationally symmetrical configuration.

7. Linear piston system (1) according to one of the preceding claims, **characterized in that** each coupling member (9) is of substantially rotationally symmetrical configuration.

8. Linear piston system (1) according to one of the preceding claims, **characterized in that** the oscillating weight (8) is surrounded in the radial direction by the housing (6), and **in that** the housing (6) is closed in an axial direction by way of a cover (60).

## Revendications

1. Système de piston linéaire (1) comprenant un boîtier extérieur (6) et un piston (40) monté mobile dans la direction axiale de manière linéaire dans le boîtier extérieur (6) et réalisé sous forme de piston de travail d'un compresseur, et un dispositif d'équilibrage oscillant passif (2), lequel comporte un boîtier (4) assemblé fixement au boîtier extérieur (6) du système de piston linéaire (1) et, dans celui-ci, au moins deux éléments d'accouplement (9) et une masse d'inertie (8) accouplée au boîtier (4) de manière à pouvoir être déviée le long d'un axe (7) par le biais de chaque élément d'accouplement (9),
les axes des déplacements des centres de gravité du piston (40) et de la masse d'inertie (8) coïncidant,
chaque élément d'accouplement (9) étant fixé au boîtier (4) du dispositif d'équilibrage oscillant (2) au niveau de respectivement au moins une zone de fixation (26, 28) et à la masse d'inertie (8) au niveau de respectivement au moins une zone de liaison (18, 20),
et, sur les au moins deux éléments d'accouplement (9), l'au moins une zone de liaison (18, 20) à la masse d'inertie (8) étant respectivement située radialement plus près de l'axe (7) que l'au moins une zone de fixation (26, 28) au boîtier (4) du dispositif d'équilibrage oscillant (2), et
au moins la majeure partie de la masse et au moins la majeure partie du volume de la masse d'inertie (8) étant, à l'état de repos, disposées entre deux éléments d'accouplement (9) dans la direction axiale,
chaque élément d'accouplement (9) accouplant, à l'état de repos de la masse d'inertie (8), cette dernière au boîtier (4) dans la direction radiale, et
la longueur axiale de la masse d'inertie (8) diminuant de manière monotone au fur et à mesure que la distance radiale à l'axe (7) augmente, de telle sorte que sa répartition de masse soit concentrée près de l'axe.

2. Système de piston linéaire (1) selon la revendication 1,
**caractérisé en ce que**
la masse d'inertie (8) est reliée sensiblement rigidement dans un plan perpendiculaire à l'axe (7).

3. Système de piston linéaire (1) selon la revendication 1 ou la revendication 2,
**caractérisé en ce que**
chaque zone de liaison (18, 20) d'un élément d'accouplement (9) à la masse d'inertie (8) est située radialement plus près de l'axe (7) que chaque zone de fixation (26, 28) de l'élément d'accouplement (9) correspondant au boîtier (4).

4. Système de piston linéaire (1) selon l'une des revendications précédentes,
**caractérisé en ce que**
chaque élément d'accouplement (9) est réalisé sous la forme d'un élément ressort (10, 12) élastique dans la direction axiale.

5. Système de piston linéaire (1) selon l'une des revendications précédentes,
**caractérisé en ce que**
chaque élément d'accouplement (9) est relié à la masse d'inertie (8) au niveau de la ou de chaque zone de liaison (18, 20) par soudage et/ou vissage et/ou collage et/ou serrage, en particulier grâce à une précontrainte élastique, et/ou est fixé au boîtier (4) au niveau de la ou de chaque zone de fixation (26, 28) par soudage et/ou vissage et/ou collage et/ou serrage, en particulier grâce à une précontrainte élastique.

6. Système de piston linéaire (1) selon l'une des revendications précédentes,
**caractérisé en ce que**
le boîtier (4) et/ou la masse d'inertie (8) sont réalisés de manière à présenter sensiblement une symétrie de révolution.

7. Système de piston linéaire (1) selon l'une des revendications précédentes,
**caractérisé en ce que**
chaque élément d'accouplement (9) est réalisé de manière à présenter sensiblement une symétrie rotationnelle.

8. Système de piston linéaire (1) selon l'une des revendications précédentes,
**caractérisé en ce que**
la masse d'inertie (8) est entourée par le boîtier (6) dans la direction radiale, et **en ce que** le boîtier (6) est fermé par un couvercle (60) dans une direction axiale.
